# EUROPÄISCHE PATENTSCHRIFT

(11) **EP 2 290 243 B1**
(45) Veröffentlichungstag und Bekanntmachung des Hinweises auf die Patenterteilung: **23.04.2014**
(21) Anmeldenummer: 10008414.4
(22) Anmeldetag: 12.08.2010
(51) Int. Cl.: F04D 19/04, F04D 27/00, F04D 27/02, F04D 29/66

(54) **Verfahren zum Betreiben einer Vakuumpumpe**
Method for operating a vacuum pump
Procédé destiné au fonctionnement d'une pompe à vide

(30) Priorität: 28.08.2009 DE 102009039118
(43) Veröffentlichungstag der Anmeldung: 02.03.2011
(73) Patentinhaber: Pfeiffer Vacuum GmbH, 35614 Aßlar (DE)
(72) Erfinder: Bernhardt, Gernot, 35625 Hüttenberg (DE); Böttcher, Jochen, 35394 Giessen (DE); Mekota, Mirko, 35630 Ehringshausen (DE)
(74) Vertreter: Manitz, Finsterwald & Partner GbR

(56) Entgegenhaltungen:
- JP-A- 2003 120 582
- US-A1- 2007 048 145
- US-B1- 6 244 825

## Beschreibung

Die Erfindung betrifft ein Verfahren zum Betreiben einer Vakuumpumpe nach dem Oberbegriff des ersten Anspruchs und eine Molekularvakuumpumpe nach Anspruch 5.

Vakuumpumpen, insbesondere Turbomolekularvakuumpumpen, werden typischerweise bei einer festen Drehzahl betrieben. Dies kann die durch die Vakuumpumpe und deren Antrieb festgelegte Nenndrehzahl aber auch eine beliebige andere einstellbare Drehzahl sein. JP 2003120582 offenbart ein Verfahren zum Betreiben einer Vakuumpumpe, wobei die Motorgeswindichkeit in Abhängigkeit von einem anderen Parameter der Pumpe von Hand verändert wird, um Vibrationen zu vermindern. Aber die Drehzahl wird normalerweise durch verschiedene Regler möglichst konstant gehalten, um die vakuumtechnischen Daten, wie beispielweise erreichter Enddruck, im durch die Drehzahl gewählten Arbeitspunkt nicht zu verändern.

Durch die Rotordrehung werden Vibrationen erzeugt, die auf die Kammer übertragen werden, an der die Vakuumpumpe befestigt ist. Bei einer festen Drehzahl bedeutet dies, dass Eigenfrequenzen der Kammer, die mit der Drehzahl in ganzzahligem Verhältnis stehen, stark angeregt werden. Zur Vermeidung dieses Problems werden im Stand der Technik zusätzliche Bauteile zwischen Vakuumpumpe und Kammer eingebaut. Diese bedeuten zusätzliche Kosten und aufgrund des zusätzlichen Leitwerts eine Verschlechterung der effektiv zum Evakuieren der Kammer nutzbaren vakuumtechnischen Daten. Beispiele solcher vorzusehenden Einrichtungen zeigen die DE-A 102007018292 und die DE-A 102005019054.

Aufgrund von elektrischen und mechanischen Verlusten erwärmen sich verschiedene Teile des Pumpsystems und des Antriebsgerätes. Abhängig von den entstehenden Verlusten und der zulässigen Erwärmung ist für Kühlung - z.B. durch Lüfter oder zirkulierendes Kühlmittel - zu sorgen. Neben erhöhten Kosten kann dies die Applikation erschweren, etwa durch unerwünschte Schwingung oder Leistungsaufnahme der Lüfter oder des Aggregats für Kühlmittel.

Es ist daher Aufgabe der Erfindung, eine Vakuumpumpe und ein Verfahren zum Betreiben einer Vakuumpumpe vorzustellen, welches die Notwendigkeit zusätzlicher Bauteile verringert.

Diese Aufgabe wird gelöst durch ein Verfahren mit den Merkmalen des ersten Anspruchs und einer Vakuumpumpe mit den Merkmalen des fünften Anspruchs. Die abhängigen Ansprüche geben vorteilhafte Weiterbildungen der Erfindung an.

Wird eine Vakuumpumpe mit einer festen Drehzahl betrieben, werden Eigenfrequenzen der mit der Vakuumpumpe verbundenen Anlage stark angeregt, die in einem ganzzahligen Verhältnis zu dieser festen Drehzahl stehen. Das Betreiben einer Vakuumpumpe mit einer Variationsphase hingegen, in der die Drehzahl des Rotors periodisch zwischen einem ersten und einem zweiten Drehzahlwert variiert wird, bedeutet, dass zwar eine Vielzahl von Frequenzen durch den Rotor angeregt werden, die Verweilzeit bei einer Frequenz jedoch kürzer ist. Dies führt in der Summe zu dem Vorteil, dass eine viel geringere Schwingungsanregung beobachtet wird. Als weiterer Vorteil wird die Temperaturbilanz der Vakuumpumpe verbessert, wenn in der Variationsphase weniger Antriebsleistung in die Motorspule eingespeist und somit die in Wärme umgesetzte Verlustleistung verringert wird. Diese Vorteile werden auch dann erreicht, wenn erster und zweiter Drehzahlwert so bemessen sind, dass die Auswirkung auf die Vakuumdaten wie erreichter Druck und Saugvermögen mit der Anwendung verträglich bleiben, insbesondere nur eine kleine Schwankung dieser Vakuumdaten entsteht.

Eine Weiterbildung besteht darin, in der Variationsphase das Variieren der Drehzahl durch Abschalten der Bestromung einer Motorspule des Antriebs zu bewirken. Eine mit modulierten Strömen bestromte Motorspule setzt zu einem gewissen Anteil die elektrischen Schwingungen in mechanische Schwingung um, die auf die Vakuumpumpe übertragen werden. Diese Art der Schwingungsanregung wird durch Abschalten der Bestromung unterbunden, und daher ingesamt die Schwingungsanregung reduziert. Der Vorteil in Bezug auf die Wärmebilanz ist in dieser Weiterbildung besonders stark ausgeprägt.

Eine andere Weiterbildung sieht vor, die zur Beschleunigung des Rotors auf eine höhere Drehzahl verwendete Leistung zu reduzieren. Hierdurch werden Leistungssprünge in der Beschleunigungsphase vermieden.

Eine wiederum andere Weiterbildung sieht vor, in der Variationsphase eine Druckmessung durchzuführen und die Variationsphase derart zu gestalteten, dass die Auswirkung auf die Vakuumdaten, insbesondere den Druck in der zu evakuierenden Kammer, so klein gehalten werden, dass keine Störung des in der Kammer ablaufenden Prozesses stattfindet.

An Hand eines Ausführungsbeispieles und seiner Weiterbildungen soll die Erfindung näher erläutert und die Darstellung ihrer Vorteile vertieft werden.

Es zeigen:
- Fig. 1:: Darstellung einer Anordnung mit Kammer und Vakuumpumpe
- Fig. 2:: Zeitlicher Verlauf der Rotordrehzahl während der Variationsphase.

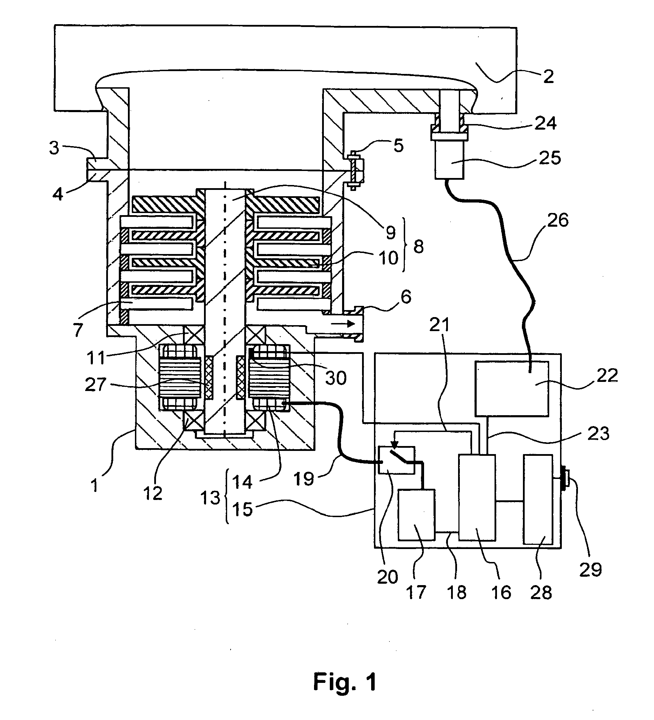

Eine Anordnung mit Vakuumpumpe zeigt Fig. 1. Die Vakuumpumpe 1 weist einen Pumpenflansch 4 auf, der mit einem Kammerflansch 3 der Kammer 2 lösbar verbunden ist. Die Verbindung wird durch Befestigungsmittel 5, beispielsweise Schrauben, Klammern oder Pratzen, gewährleistet. Das Gas wird durch die im Pumpenflansch vorgesehene Öffnung angesaugt, in der Vakuumpumpe verdichtet und durch den Pumpenauslass 6 an eine nicht gezeigte Pumpe übergeben, die es dann weiterverdichtet. Als pumpaktive Elemente weist die Vakuumpumpe einen mit Schaufeln versehenen Rotor 8 auf. Die Schaufeln sind an mehreren axial beabstandeten Rotorscheiben 10 angeordnet. Zwischen den Ebenen sind ebenfalls mit Schaufeln versehene Statorscheiben 7 angeordnet.

Der Rotor umfasst eine Welle 9, die von einem unteren Lager 12 und einem oberen Lager 11 drehbar unterstützt wird. Auf der Welle ist ein Motormagnet 27 angeordnet, der mit einer statorseitigen Motorspule 14 zusammenwirkt. Der Antrieb 13 wird von Motorspule 14 und Steuergerät 15 gebildet. Das Steuergerät ist mit einer Antriebsleitung 19 mit der Motorspule verbunden, über die die Bestromung der Motorspule bewirkt wird. Die Antriebsleitung ist in der Regel teilbar gestaltet und weist hierzu Stecker und Buchse an den Übergängen in die Vakuumpumpe und Steuergerät auf. In einer Weiterbildung kann das Steuergerät an der Pumpe angeflanscht sein. Die Antriebsleitung 19 verläuft dann lediglich innerhalb von Steuergerät und Vakuumpumpe. Die Bestromung der Motorspule führt zu einer schnellen Drehung, insbesondere im Bereich von 25 000 bis 100 000 Umdrehungen pro Minute.

Die gezeigte Anordnung enthält ein Messgerät 25, welches an einem an der Kammer befindlichen Messflansch 24 angeordnet ist. Das Messgerät ist durch eine Messleitung 26 mit dem Steuergerät verbunden.

Das Steuergerät 15 weist mehrere elektronische Baugruppen auf. Es umfasst eine Steuereinheit 16, welche die Kommutierungssignale erzeugt und dadurch die Bestromungsform der Motorspule festlegt. Die Steuereinheit ist durch eine Endstufensteuerverbindung 18 mit einer Endstufe 17 wirkverbunden, welche die Ströme und Spannungen für die Motorspule erzeugt und den Leistungsteil darstellt.

Eine Schalteinheit 20 dient zur Unterbrechung der Bestromung der Motorspule und wird über eine Abschaltverbindung 21 von der Steuereinheit angesteuert.

Ein in der Vakuumpumpe angeordneter Drehzahlsensor 30 dient der Überwachung der Drehzahl und steht dazu mit dem Steuergerät in Verbindung.

Die Messleitung 26 ist mit einer Messeinheit 22 verbunden. Diese übergibt Werte über eine Messverbindung an die Steuereinheit. Das Steuergerät weist ein Bedienelement 28 auf, über welches die Funktionen vom Benutzer ausgewählt und überwacht werden können. Hierzu weist das Bedienelement einen Schalter 29 auf, alternativ oder zusätzlich können weitere Schalter, Touch-Screens, Datenschnittstellen oder ähnliches vorhanden sein.

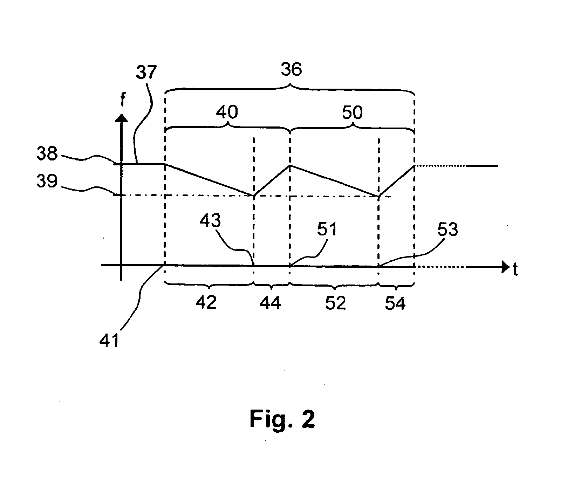

Anhand des in Figur 2 gezeigten Drehzahlverlaufs 37 wird im Folgenden das Verfahren und das Zusammenwirken der zuvor beschriebenen Komponenten der Anordnung beschrieben.

Das Steuergerät 15 erzeugt eine Bestromung der Motorspule 14, durch die der Rotor 8 auf Normaldrehzahl 38 gehalten wird. Diese ist in der Regel mit Hinblick auf die Vakuumdaten unter Berücksichtigung von Rotorlebensdauer und Sicherheitserwägungen gewählt. Während das Saugvermögen, gerade für leichte Gase, mit steigenden Drehzahlen besser wird, nehmen die kinetische Energie des Rotors und die Materialbelastung zu.

Am ersten Abschaltzeitpunkt 41 beginnt die Variationsphase 36. An diesem Zeitpunkt schaltet die Steuereinheit 16 über die Abschaltverbindung 21 und die Schalteinheit 20 die Bestromung der Motorspule 14 ab. Daraufhin nimmt in einer ersten Verzögerungsphase 42 die Drehzahl ab. Bremsend wirken die Reibungen in den Lagern 11 und 12 und mit dem gepumpten Gas. Die Steuereinheit überwacht während der Verzögerungsphase die Drehzahl. Sobald die Drehzahl des Rotors auf die abgesenkte Drehzahl 39 gesunken ist, ist der erste Einschaltpunkt 43 erreicht. An diesem wird die Schalteinheit 20 wieder von der Steuereinheit umgeschaltet, so dass die Motorspule bestromt wird. Durch die Bestromung wird in der ersten Beschleunigungsphase 44 eine Beschleunigung des Rotors, das heißt eine Erhöhung seiner Drehzahl, bewirkt. Mit Erreichen der Normaldrehzahl endet die Beschleunigungsphase und die erste Periode 40.

Die zweite Periode 50 läuft analog der ersten Periode ab. Sie beginnt mit dem zweiten Abschaltzeitpunkt 51, an dem die Bestromung der Motorspule eingestellt wird. Während der zweiten Verzögerungsphase 52 sorgen Gas- und Lagerreibung für ein Abfallen der Drehzahl des Rotors. Am zweiten Einschaltpunkt 53 wird die Bestromung wieder eingeschaltet und die Drehzahl des Rotors in einer zweiten Beschleunigungsphase 54 auf die Normaldrehzahl erhöht.

Die Variationsphase dauert an, bis sie ausgeschaltet wird, beispielsweise über den Schalter 29 oder ein Kommando, das von der den in der Kammer ablaufenden Prozess steuernden Anlagensteuerung an das Steuergerät übermittelt wird, oder bis eine anderes Kritierium eintritt, beispielsweise Ablauf eines Zeitfensters oder Erreichen einer vorgegebenen Periodenzahl.

Durch das zeitweilige Abschalten der Bestromung in der Variationsphase wird erreicht, dass die Rotordrehzahl eine Vielzahl von Frequenzen lediglich kurzzeitig anregt, da nur kurz die Resonanzbedingung erreicht wird. Hierdurch ergibt sich ein viel schwingungsärmerer Betrieb der gesamten Anordnung. Dies ist bei schwingungsempflindlichen Anwendungen, beispielsweise Elektronenmikroskopen und Elektronenstrahllitographie, von großem Vorteil. Das Abschalten der Bestromung bewirkt zudem, dass der Motorspule weniger elektrische Leistung zugeführt wird, wodurch auch die in Wärme umgesetzte Verlustleistung sinkt. Somit bleibt die Vakuumpumpe kühler.

Abwandlungen und Weiterbildungen können weitere Vorteile erbringen.

Die abgesenkte Drehzahl 37 kann vom Benutzer einstellbar sein. Damit kann der Benutzer entscheiden, wie groß das Fenster der Drehzahlvariation ist. Dies kann beispielsweise vorteilhaft sein, wenn große Toleranzen bei den Vakuumdaten erlaubt sind.

Anstelle der Normaldrehzahl 38 kann eine tiefer liegende Drehzahl als Kritierum für das Beenden der Beschleunigungsphase dienen. Zusammen mit der Wählbarkeit der abgesenkten Drehzahl ist dadurch möglich, die Drehzahl in einem in Bezug auf die Schwingungsanregung der Kammer günstigen Drehzahlfenster zu variieren.

Anstelle des Bremsens durch Reibung in Lager und an Gas kann ein aktives Bremsen benutzt werden, um das Drehzahlfenster schneller durchfahren zu können und so die Anregungszeit weiter verkürzen zu können. Dies kann durch die Nutzung von Bremswiderständen erreicht werden.

Die Variation der Drehzahl kann nach einem vorgegeben Funktionsverlauf erfolgen. In dem Fall wird durch aktives Bremsen und Beschleunigen bspw. ein sinusförmiger Verlauf aufgeprägt. Hierdurch kann die Schwingungsanregung weiter verringert werden.

Anstelle des Abschaltens der Bestromung durch Abklemmen mittels der Schalteinheit 20 kann in der Verzögerungsphase ein drehmomentfreier Betrieb stattfinden. In diesem wird die Motorspule derart bestromt, dass ein Magnetfeld mit der Rotordrehzahl dem Rotor folgt, ohne jedoch ein Drehmoment zu erzeugen.

Hierdurch kann auf den Drehzahlsensor 30 verzichtet werden. Die Vorteile in Bezug auf die Schwingungsanregung werden so vertieft. Die Vorteile im Hinblick auf die Temperatur sind jedoch weniger stark ausgeprägt.

Ein grundsätzlicher Verzicht auf den Drehzahlsensor ist möglich, wenn beim Einschalten vor Beginn der Beschleunigungsphase die Nulldurchgänge der durch den Motormagneten in die Motorspule induzierte gegenelektromotorische Kraft beobachtet und daraus die Drehzahl bestimmt wird. Dies kann beispielsweise von einer entsprechend angepasste Steuereinheit durchgeführt werden. Diese weist dann Mittel zum Messen von Strömen und Spannungen der Motorspulen oder deren Zuleitungen auf. Die Vorteile in Bezug auf Temperaturhaushalt und Schwingungen bleiben erhalten, zusätzlich wird der Vorteil erreicht, dass ein Bauteil eingespart werden kann, welches zum einen störanfällig ist und zum anderen aufgrund seiner Empfindlichkeit gegen beispielsweise radioaktive Strahlung die Aufstellorte der Vakuumpumpe beschränkt.

Das Steuergerät 15 ist angepasst, das vorbeschriebene Verfahren durchführen zu können. Die Anpassung umfasst im gezeigten Beispiel insbesondere die Schalteinheit 20. Außerdem ist die Steuereinheit 16 mit Mitteln zum Vergleichen der Drehzahl mit Vorgabewerten ausgestattet.

Zusätzlich kann die Steuereinheit eine Leistungsreduzierung ermöglichen, so dass in der Beschleunigungsphase der Rotor mit einer geringeren als der maximalen Leistung beschleunigt wird. Auf diese Weise werden Leistungssprünge vermieden.

Eine Weiterbildung greift die in Figur 1 gezeigte Möglichkeit zur Druckmessung auf. Das Messgerät 25, welches am Messflansch 24 der Kammer angeordnet ist, erzeugt ein mit dem Druck in der Kammer korrespondierendes Signal. Es gibt Messgeräte, die bereits den Druckwert selbst bereitstellen. Das Signal wird an die Messeinheit 22 übertragen, welche mit der Steuereinheit verbunden ist. Diese benutzt den Druckwert, um die Variationsphase derart anzupassen, dass die Schwankungen derart klein gehalten werden, dass der Prozess in der Kammer nicht gestört wird. Die Anpassung der Variationsphase kann die Periodendauer, die den Wert der abgesenkten Drehzahl oder die Kurvenform betreffen.

Alternativ zu der in Figur 1 gezeigten Anordnung kann das Messgerät auch in der Vakuumpumpe angeordnet sein.

## Patentansprüche

1. Verfahren zum Betreiben einer Vakuumpumpe (1) mit einem Rotor (8) und einem Antrieb (13), welcher die Drehung des Rotors (8) mit einer Drehzahl bewirkt, **dadurch gekennzeichnet, dass** die durch den Antrieb (13) bewirkte Drehung des Rotors (8) eine schnelle Drehung ist, insbesondere eine Drehung im Bereich von 25000 bis 100000 Umdrehungen pro Minute und dass das Verfahren eine Variationsphase (36) umfasst, in der die Drehzahl des Rotors (8) periodisch zwischen einem ersten Drehzahlwert (38) und einem zweiten Drehzahlwert (39) variiert wird.

2. Verfahren nach Anspruch 1, **dadurch gekennzeichnet, dass** das Variieren durch Abschalten der Bestromung einer Motorspule (14) des Antriebs (13) erfolgt.

3. Verfahren nach Anspruch 1 oder 2, **dadurch gekennzeichnet, dass** in der Variationsphase (36) die zur Beschleunigung des Rotors (8) aufgewendete Leistung auf einen gegenüber der Maximalleistung verringerten Wert begrenzt ist.

4. Verfahren nach einem der vorhergehenden Ansprüche, **dadurch gekennzeichnet, dass** in der Variationsphase (36) eine Druckmessung durchgeführt wird.

5. Molekularvakuumpumpe (1), insbesondere Turbomolekularpumpe, mit einem schnelldrehenden Rotor (8), einem Antrieb (13), insbesondere einem Synchronmotor, mit einem Steuergerät (15), **dadurch gekennzeichnet, dass** das Steuergerät angepasst ist, den Rotor (8) mit einer zwischen einem ersten und einem zweiten Wert periodisch variierenden Drehzahl zu betreiben.

## Claims

1. A method of operating a vacuum pump (1) having a rotor (8) and a drive (13) which effects the rotation of the rotor (8) at a rotational speed, **characterised in that** the rotation of the rotor (8) effected by the drive (13) is a fast rotation, in particular a rotation in the range from 25,000 to 100,000 revolutions per minute; and **in that** the method comprises a variation phase (36) in which the rotational speed of the rotor (8) is varied periodically between a first rotational speed value (38) and a second rotational speed value (39).

2. A method in accordance with claim 1, **characterised in that** the variation takes place by switching off the application of current to a motor coil (14) of the drive (13).

3. A method in accordance with claim 1 or claim 2, **characterised in that** the power exerted for accelerating the rotor (8) in the variation phase (36) is limited to a value reduced with respect to the maximum power.

4. A method in accordance with any one of the preceding claims, **characterised in that** a pressure measurement is carried out in the variation phase (36).

5. A molecular vacuum pump (1), in particular a turbomolecular pump, having a fast-rotating rotor (8), a drive (13), in particular a synchronous motor, having a control devcie (15), **characterised in that** the control device is adapted to operate the rotor (8) at a rotational speed varying periodically between a first value and a second value.

## Revendications

1. Procédé pour le fonctionnement d'une pompe à vide (1) comprenant un rotor (8) et un entraînement (13), qui provoque la rotation du rotor (8) avec une vitesse de rotation, **caractérisé en ce que** la rotation du rotor (8) provoquée par l'entraînement (13) est une rotation rapide, en particulier une rotation dans la plage de 25 000 à 100 000 tours par minute, et **en ce que** le procédé inclut une phase de variation (36) dans laquelle la vitesse de rotation du rotor (8) est variée périodiquement entre une première valeur (38) et une seconde valeur (39).

2. Procédé selon la revendication 1, **caractérisé en ce que** la variation a lieu en coupant l'alimentation électrique d'un bobinage moteur (14) de l'entraînement (13).

3. Procédé selon la revendication 1 ou 2, **caractérisé en ce que** dans la phase de variation (36) la puissance appliquée pour l'accélération du rotor (8) est limitée à une valeur réduite par rapport à la puissance maximale.

4. Procédé selon l'une des revendications précédentes, **caractérisé en ce que** l'on procède à une mesure de pression dans la phase de variation (36).

5. Pompe à vide moléculaire (1), en particulier pompe turbo-moléculaire, comprenant un rotor en rotation rapide (8), un entraînement (13), en particulier un moteur synchrone, et comprenant un dispositif de commande (15), **caractérisée en ce que** le dispositif de commande est adapté pour faire fonctionner le rotor (8) avec une vitesse de rotation qui varie périodiquement entre une première valeur et une seconde valeur.
